# EUROPEAN PATENT SPECIFICATION

(11) **EP 2 102 300 B1**
(45) Date of publication and mention of the grant of the patent: **23.04.2014**
(21) Application number: 07865632.9
(22) Date of filing: 13.12.2007
(51) Int. Cl.: E06B 3/28, E06B 5/00

(54) **Auxiliary frame with adhered plasic sheet for a window**
Vorsatzrahmen mit aufgeklebter Folie für ein Fenster
Cardre additionel pour une fenêtre comprenant un film plastique collé

(30) Priority: 29.12.2006 US 618015
(43) Date of publication of application: 23.09.2009
(73) Proprietor: 3M Innovative Properties Company, Saint Paul, MN 55133-3427 (US)
(72) Inventor: REUTER, Robert, J., Saint Paul, Minnesota 55133-3427 (US)
(74) Representative: Isarpatent
(86) International application number: PCT/US2007/087391
(87) International publication number: WO 2008/082905

(56) References cited:
- JP-A- 2006 028 849
- US-A- 5 383 312
- US-B1- 6 197 419
- US-B1- 6 497 777

## Description

### BACKGROUND

The present invention relates generally to frame assemblies carrying films. More particularly, it relates to apparatus, methods, and a kit for easily and reliably assembling window film frame assemblies carrying window films in a manner for avoiding formation of permanent film flaws in the films that diminish their optical properties, while at the same time providing for thermal insulation of window assemblies during repeated heating seasons.

Window films are generally transparent plastic and/or metallized laminates that are applied as a thin layer to transparent panels, such as glass windows. Window films are available in many different compositions for bringing about varying effects on the optical and mechanical properties of the underlying transparent panels. Window films can reduce energy costs by minimizing the amount of heat entering a building through sunlight, thereby decreasing the amount of energy needed to cool the building. Window films also act as a filter for reflecting most ultraviolet and infrared wavelengths while allowing passage of visible light. This can result in substantial reductions in cooling costs. As noted, such films reduce the amount of ultraviolet entering a window, and are also often applied to reduce fading of the contents of a room. Other kinds of thin window films include security films that are applied to prevent glass from shattering, as well as privacy films for controlling the visible light transmitted for effecting privacy purposes. Examples of window films are described in US 5,383,312 A and JP 2006-028849 A.

It will be appreciated that several factors are considered in selecting the correct film to be installed. Such factors include visible light transmission, properties of solar energy to be reflected, and aesthetic considerations, such as distortion free viewing following installation.

Because window films are usually installed by applying them to either or both surfaces of flat finished glass, the resulting laminates are less costly than buying chemically altered specialty glass for bringing about the same desired solutions. Because window films provide energy savings and help protect furnishings among other advantages, they are generally considered to be an investment that pays for itself. As such, they have gained widespread commercial acceptance.

Attempts have been made to space transparent films incrementally from windows in order to improve the R-value associated with the windows. An R-value is a rating used to measure how well insulation can resist heat flow. The higher the R-value, the greater the insulating properties and the slower heat and cold flows through it. However, while window films are beneficial they have not necessarily been successfully adapted for use in installation over transparent panels, such as windows. In part, this is due to the films being very thin, such as in the order of about 2 mil (about 0.051 mm). Typically, when applied to a frame for mounting the same, they cannot be kept planar over a frame opening. This is due primarily to their flimsy nature (i.e., they cannot sustain their dimensions). Accordingly, physical distortions of the films may arise and their optical properties are compromised. Because these films tend to be heat shrinkable, one typical approach for addressing their flimsy nature is to apply heat locally on the film. This is usually done with a hair dryer, heat gun, or other similar device. Heating causes the film to shrink over the frame opening, whereby it assumes a taught and generally planar orientation. As such, visual distortions are minimized. However, when heat is applied, it is usually done after the film has been applied to the frame and the film has reached room temperature of its operating environment. In some cases, heat is applied up to 24 hours after the film has been mounted on a frame. Clearly, such additional labor and time inhibit quick and reliable mounting of window film sheet structures to frames and the like.

Unless the window films are properly applied to windows, there is a chance that they will crease and fold, during cutting and installation due to their inherent highly flexible nature. As such there is a chance that they will cause permanent flaws in the film which inhibit their optical properties after being applied. Some of these window films include UV blocking materials that may in certain circumstance even damage the underlying window to which they are applied. As such, it is desired to avoid having the film contact the window.

Also, such window film sheet structures are typically provided with an adhesive layer. The adhesive layer is exposed following removal of a low adhesion release liner and mounted to a window casement or the like. Cutting and installing such thin films tends to be problematic due to their very flexible nature as well as the adhesive layer sticking to itself in the process. As such, this tends to limit its use in a do-it-yourself application. Also, direct application of the adhesive layers to window casements or the like inhibits reuse from heating season to heating season since the adhesive qualities tend to diminish through repeated usage.

Thus, due to the number and complexity of steps involved in installing inherently flimsy film, along with the adhesive issues associated with installing thin window films, the prior approaches are generally considered time consuming, demanding, as well as potentially costly. These burdens are even more pronounced particularly in the do-it-yourself field, wherein a typical installer has very little experiences handling these materials.

Without the foregoing issues being satisfied, the true potential of successfully applying window film sheet structures providing for thermal insulation as well as avoiding permanent flaws due to their flimsy nature and adhesive qualities may not be fully achieved, especially in a simple, reliable, less time consuming, and less costly manner.

### SUMMARY

The present invention provides a film frame assembly as recited in claim 1, a film frame assembly in combination with a window assembly as recited in claim 7, a method of making a window film frame assembly as recited in claim 8, and a kit as recited in claim 9 adapted for making window film frames that are adapted for installation over transparent panels, such as windows in a manner that represents improvements over prior art approaches. Preferred features of the invention are recited in the dependent claims.

The present invention relates generally to frame assemblies carrying films and, more particularly, to window film frame assemblies adapted for installation over windows as well as maintaining their optical properties. The present invention provides a film frame assembly that comprises: a frame defining a frame opening; one or more pressure-sensitive adhesive portions on at least one side of the frame, and a generally flexible film sheet structure attached to the one or more pressure-sensitive adhesive portions for covering the frame opening, wherein the film sheet structure has stiffness so as to conform to the shape of the film structure across the frame opening.

The present invention provides a method of making a window film frame assembly adapted for use in combination with an opening in a window assembly, the method that comprises: providing a frame defining a frame opening, applying one or more pressure-sensitive adhesive portions to at least one side of the frame, attaching a generally flexible film sheet structure to the adhesive portions wherein the film sheet structure has stiffness so as to conform to the shape of the film structure across the frame opening.

The present invention provides a kit that comprises: a frame defining a frame opening; one or more pressure-sensitive adhesive portions on at least one side of the frame; and a generally flexible film sheet structure that is attachable to the one or more pressure-sensitive adhesive portions for covering a frame opening. The flexible film sheet structure has stiffness such that the film sheet structure generally conforms to the shape of the film structure across the frame opening.

An aspect of the invention is the provision of a method, apparatus, and kit for providing a window film frame assembly adapted for installation over a window assembly.

An aspect of the present invention is a method, apparatus, and kit that achieve the foregoing in a manner that obtains the benefits of installation over window film assemblies by using window film sheet structures that do not require adhesives.

An aspect of the present invention is a method, apparatus, and kit that that are adapted to use window film sheet structures to achieve the foregoing in a manner that minimizes significant distortion of viewable images therethrough.

An aspect of the present invention is a method, apparatus, and kit that are adapted for using window film sheet structures for installation over windows as well as for maintaining their optical properties.

An aspect of the present invention is a method, apparatus, and kit that achieve the foregoing in a manner that minimizes significantly the costs and labor associated with making such window film frame structures.

Another aspect of the present invention is a method, apparatus, and kit that achieve the foregoing in a manner that increases significantly the reliability and ease of installing, such window film sheet structures particularly in a do-it-yourself environment.

The aspects described herein are merely a few of the several that can be achieved by using the present invention. The foregoing descriptions thereof do not suggest that the invention must only be utilized in a specific manner to attain the foregoing aspects.

These and other features and aspects of this invention will be more fully understood from the following detailed description of the preferred embodiments. It should be understood that the foregoing generalized description and the following detailed descriptions are exemplary and are not restrictive of the invention.

### BRIEF DESCRIPTION OF THE DRAWINGS

**FIG. 1A** is a schematic view of one aspect of a method of forming a frame assembly to be used in mounting a window film sheet structure in spaced apart relationship to a window.
**FIG. 1B** is a schematic view of another aspect of a method of assembling the frame assembly illustrated in **FIG. 1A****.**
**FIG. 2** is a schematic view of mounting the frame assembly in an opening of a window assembly.
**FIG. 3** is a schematic view of applying pressure-sensitive adhesive tape along one side of the frame assembly.
**FIG. 3A** is a schematic view of a roll of pressure-sensitive adhesive tape.
**FIG. 4** is a schematic view of a window film sheet structure being placed over the adhesive portion of a window prior to being cut the film being laminated thereto.
**FIG. 5** is a schematic view of a release sheet having been removed prior to placing the window film sheet structure thereover.
**FIG. 6** is a schematic view of the window film sheet structure being trimmed to the size and shape of the frame assembly.
**FIG. 7** is a schematic view of the window film frame assembly being installed over a window surface.
**FIG. 8** is a partial and enlarged view of the window film sheet structure that is usable in the present invention.

### DETAILED DESCRIPTION

The words "a", "an", and "the" are used interchangeably with "at least one" to mean one or more of the elements being described. By using words of orientation, such as "top", "bottom", "overlying", "front", "back" and "backing" and the like for the location of various elements in the disclosed articles, we refer to the relative position of an element with respect to a horizontally-disposed body portion. It is not intended that the disclosed articles should have any particular orientation in space during or after their manufacture.

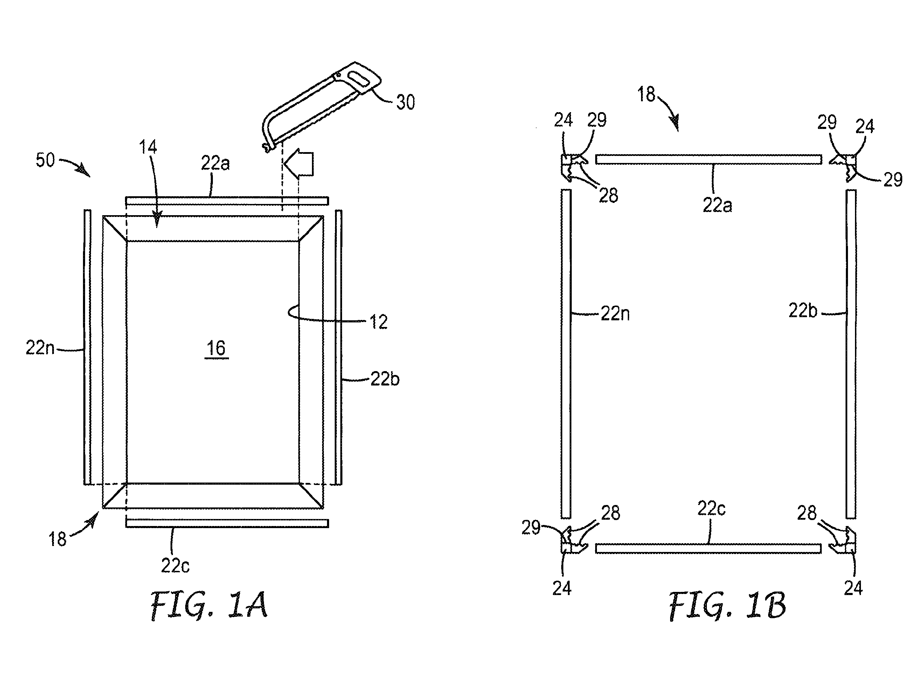

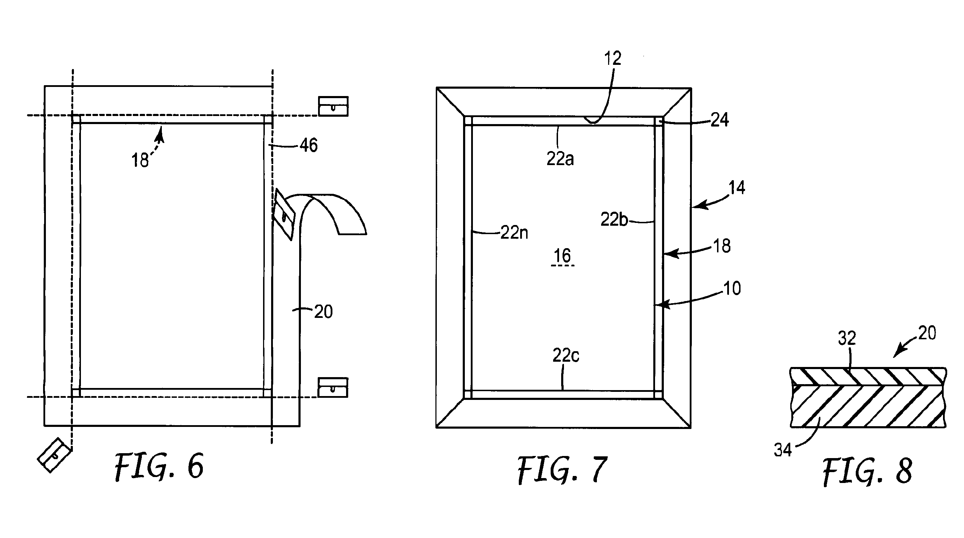

Reference is made to **FIGS. 1A-8** for illustrating the making and installing of a window film frame assembly **10 (****FIG.** 7) made according to this invention. As seen in **FIG. 7****,** the window film frame assembly **10** is particularly adapted to be mounted relative to an opening **12** defined by an assembly, such as a window assembly **14.** The window film frame assembly **10** is used in combination with and, held in spaced apart relationship to a transparent panel **16,** such as a window **16,** of the window assembly **14.** The window **16** may made of a wide variety of suitable materials, such as glass, plastic, etc. Alternatively, the window film frame assembly **10** can be used independently without a window in the window assembly **14.** In the illustrated embodiment, the window assembly **14** is of a residential type. However, the present invention is not limited to such a window system since other suitable systems for doors, panels and the like are envisioned.

The window film frame assembly **10** essentially includes a frame assembly **18 (****FIGS. 1A-7****)** and a window film sheet structure **20** detachably mounted thereon. The frame assembly **18** includes a plurality of elongated frame elements or segments **22ₐ₋ₙ** (collectively, **22)** and a suitable interconnecting frame corner connector members **24 (****FIG.7****).** The frame segments **22** may be of the type used for window screens, screen doors, and the like. As such, the frame segments **22** have hollow interior portions with open ends for cooperation with the interconnecting frame corner connector members **24** in a manner to be described. The frame segments **22** may be made of roll-formed aluminum or sheet steel, or may even be extruded aluminum. Other suitable materials and constructions may be used, such as wood, plastic or the like.

Typically, frame assemblies of this type include four elongated frame segments, each having generally uniform cross-sections that are interconnected together as will be described by the interconnecting frame corner connector members **24.** While a rectangular frame assembly is illustrated, it will be understood that other geometric configurations are envisioned for purposes of matching the contour of the opening into which it is to be installed.

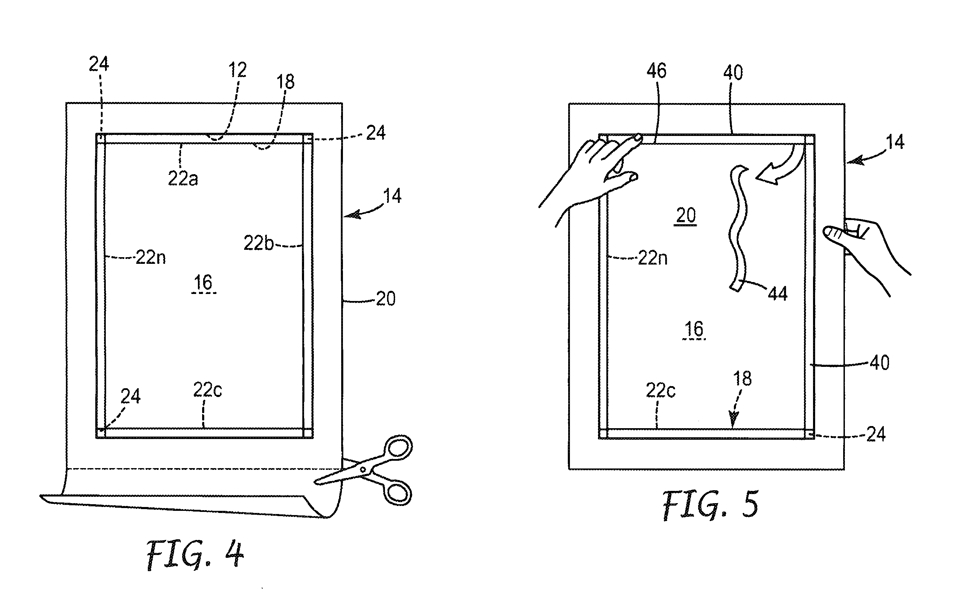

As noted, the corner connector members **24** join together the frame segments **22** to form the frame assembly **18** and define a frame opening **26 (****FIG. 5****).** The corner connector members **24** also reinforce the frame assembly **18** to inhibit its twisting or bending during installation and removal from the opening **12.** Also, the frame assembly **18** can be held generally flat so as to assist in mounting the window film sheet structure **20** in a generally planar relationship over the frame opening **26.** The corner connector members **24** form the exposed corner of the frame assembly **18** and are sized and shaped to match with the ends of the frame segments **22** to form a uniform appearing frame. Each of the corner connector members **24** may have two rectangular shaped legs **28** projecting therefrom that are arranged at right angles. The legs **28** are sized and shaped to frictionally fit within the hollow portions of the frame segments **22** so as to snuggly mate therewith. Also, the corner connector members **24** have edges **29** that are adapted to abut against the ends of the frame segments **22** to act as stops or limits. The corner connector members **24** are made of metal, such as aluminum, but could also be made of molded plastic or other suitable materials. Alternatively, the corner connector members **24** may have other sizes and shapes. For example, instead of legs **28** being used for effecting the connection, the corner connector members **24** may include receptacle portions (not shown) for slidably and snuggly receiving the ends of the frame segments.

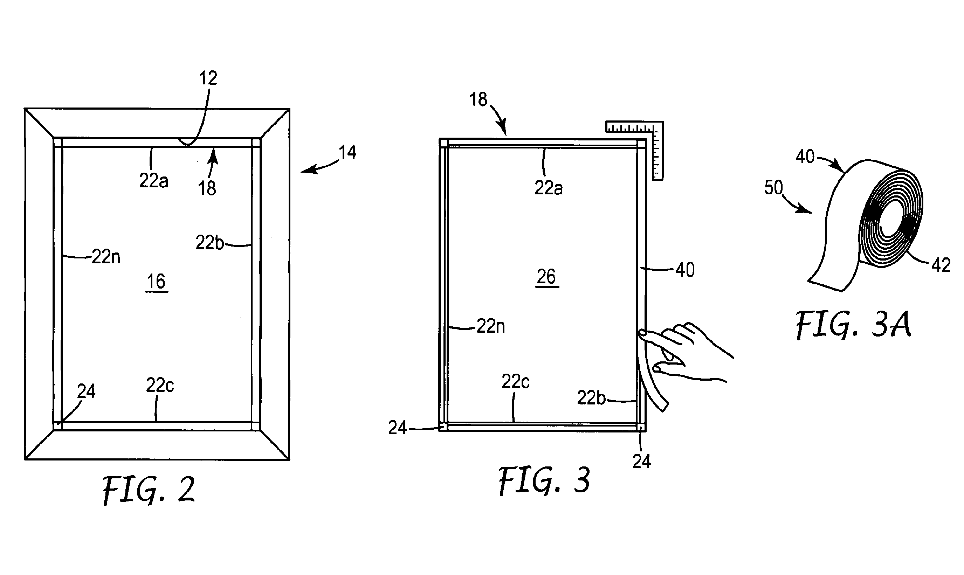

Before making the window film frame assembly **10,** the size and shape of the opening **12** are determined. As seen in **FIG. 1A** the frame segments **22** may then be appropriately measured and cut. A cutting tool **30,** such as a hacksaw **30** may used. Alternatively, pre-cut frame segments may be utilized in a kit **50,** portions of which are collectively illustrated in **FIGS. 1A-8****.** Since the corner connector members **24** are to be used, the respective linear dimensions of the frame segments **22,** as viewed in **FIG. 1A** are shortened by suitable distances to accommodate the corner connector members 24. The frame assembly **18** thus formed snuggly fits the opening **12** (see, **Figs. 2** and **7****).** While the corner connector members are illustrated for forming a frame, other various attachment schemes may be used. These other attachment schemes include, but are not limited to tape, clamps, adhesives, such as glue, or the like.

In this embodiment, the window film sheet structure **20** may be a transparent plastic material that is flexible and yet has sufficient stiffness so that it can retain its dimensions and shape. In addition, the window film sheet structure **20** is to have its major exterior surfaces without an adhesive layer. There are a number of approaches for attaining such a configuration within the spirit and scope of this invention.

In one illustrated embodiment (see **FIG. 8****),** the window film sheet structure **20** is a window film structure that includes a removable clear liner **32** joined to a film base structure **34** through a pressure-sensitive adhesive layer (not shown). Instead of removing the clear liner **32,** it will remain with the base structure **34.** Accordingly, the film will have a thickness in a range that will provide the requisite stiffness. This window film sheet structure **20** may be of the solar window film type. The clear liner can be made of a suitable polyester, vinyl, or the like and the film base structure **34** can be made of a suitable polypropylene, polyethylene material as well as an adhesive layer (not shown). Other suitable polymeric sheet materials can be used for the above materials. Whatever materials are used, the collective thicknesses should be sufficiently thick for the window film sheet structure **20** to be flexible and yet stiff enough to hold its dimensions during use. For example, the window film sheet structure may have a thickness in the range of about 5 mil to about 10 mil (i.e. about 0.127 mm to about 0.254 mm). One commercial version of such a film structure is Prestige™ that is commercially available from 3M Company, St. Paul, MN. This film has a base structure made of a polyester material and an adhesive structure layer (not shown) made of and a clear liner also made of a polyester material. This film has a thickness of about 1 to 8 mil. The versions providing for the stiffness are intended to be used. While Prestige™ film is used, other commercial embodiments are envisioned. For example, Scotch® Tint window film that is commercially available from 3M Company, St. Paul, MN may be used. While the window film sheet structure **20** noted typically has its clear liner removed, this invention envisions not removing such so as to impart stiffness. In this manner, the window film sheet structure **20** will retain its planar relationship and avoid being too flimsy and creasing so as to cause permanent flaws therein. Another embodiment contemplates using a window film structure with an additional transparent layer that is added to a window film structure. The additional layer serves to increase thickness of the window film sheet structure so that the latter will obtain desired stiffness. The additional layer may be co-extruded with the window film base structure. The additional layer is essentially added to provide stiffness to the overall window film sheet structure. In this manner, the window film sheet structure will tend to retain its dimensions and planarity, such as when mounted to the film frame assembly. The additional layer is intended to primarily be a transparent material that does not possess any additional optical properties that affect the functioning of the window film sheet structure. Alternatively, the additional layer may have added thereto, in any suitable manner, materials that can alter the optical properties of the overall window film sheet structure.

The window film sheet structures may be selected from a group of window film structures that comprises solar window film, privacy window film, security window film, graphic design film, frosted finish film or any combination thereof. The foregoing films may reflect ultraviolet and infrared solar energy as well as possess other known characteristics.

Provision is made for a kit **50** (see **FIGS. 1-8****)** containing components that facilitate an installer being able to customize the window film frame assembly to a window assembly having a wide variety of shapes and sizes and in a do-it-yourself manner. As illustrated in **FIG. 1A****,** the kit **50** includes a set of four metal frame segments **22** as well as a plurality of frame corner connector members **24.** After being measured and cut to size, the frame segments **22** and the connector members **24** are laid out, such as shown in **FIG. 1B****,** to be assembled into the frame assembly **18.** In this regard, an installer merely inserts each one of the corner connector members **24** into respective openings at the end of the frame segments **22.** A tool (not shown) may be used to forcibly drive the corner connector members **24** into the frame segments **22.** The frame segments **22** are oriented so as to be orthogonal with respect to each other.

The frame assembly **18** may then be test fit (see **FIG. 2****)** into the opening **12** formed adjacent the window assembly **14.** As seen in **FIG. 3****,** the frame assembly **18** is squared and pressure-sensitive adhesive stripes **40** are added along one side of the frame segments. In one illustrated embodiment, the pressure-sensitive adhesive stripes **40** may be of the double-coated type. The invention contemplates use of various kinds of pressure-sensitive adhesives including removable and permanent. The invention also envisions other suitable kinds of adhesive systems. As such, the pressure-sensitive adhesive stripes **40** may be cut from a roll **42 (****FIG.3A****)** thereof that may be provided in the kit **50.**

As illustrated in **FIG. 4****,** an oversized web of the window film sheet structure **20** is placed over the frame assembly **18** so that it can be cut to the proper dimensions. As seen in **FIG. 5****,** the window film sheet structure **20** has been removed and release liners **44** of the pressure-sensitive adhesive stripes **40** are removed, thereby exposing their adhesive portions **46.** The adhesive portions **46** are to engage and hold to the film structure **20** to the frame. Then as shown in **FIG. 6****,** the cut window film sheet structure is joined to the pressure-sensitive adhesive stripes, whereby the margin beyond the frame is trimmed as by a razor or other suitable cutting implement. Once it is trimmed, the window film frame assembly **10** is ready to be installed in the window opening **12,** such as illustrated in **FIG.** 7. Because of the foregoing arrangement, the R-value rating may be increased.

In order to implement the foregoing, the present invention provides of a kit **50** as follows. This kit **50** is to be used in the context of a do-it-yourself environment. It includes as noted, four metal frame segments **22** as well as a plurality of frame corner connector members **24;** a web of the window film sheet structure **20;** a roll **42** of pressure sensitive stripes **40,** a cutting tool **30,** as well as a set of instructions.

The above embodiments have been described as being accomplished in a particular sequence, it will be appreciated that such sequences of the operations may change and still remain within the scope of the invention. Also other procedures may be added.

This invention may take on various modifications and alterations without departing from the scope of the invention as set forth in the following claims. Accordingly, this invention is not limited to the above-described embodiments.

## Claims

1. A film frame assembly (10) adapted for installation over an opening (12) defined by a window assembly (14), the film frame assembly (10) comprising:
a frame (18) defining a frame opening (26), the frame (18) comprising a plurality of elongated frame segments (22) and a plurality of corner connector members (24), wherein upon final assembly of the frame each one of the corner connecting members (24) is connected to two adjacent elongated frame segments (22), including edges of each one of the corner connector members (24) abutting against an end of each of the corresponding two adjacent elongated frame segments (22);
one or more pressure-sensitive adhesive portions (40) on at least one side of the frame; and
a generally flexible film sheet structure (20) attached to the one or more pressure-sensitive adhesive portions (40) for covering the frame opening (26), wherein the film sheet structure (20) conforms to the shape of the frame (18) across the frame opening (26).

2. The film frame assembly (10) of claim 1, wherein the film sheet structure (20) includes non-adhesive exterior surfaces.

3. The film frame assembly (10) of claim 2, wherein the film sheet structure (20) is selected from a group that comprises solar window film, privacy window film, security window film, graphic design window film, frosted finish window film, and any combination thereof.

4. The film frame assembly (10) of claim 2, wherein the film sheet structure (20) has a thickness in the order of at least about 0.127 mm (5 mil).

5. The film frame assembly (10) of claim 4, wherein the film sheet structure (20) has a thickness in the order of about 0.127 mm (5 mil) to about 0.254 mm (10 mil).

6. The film frame assembly (10) of claim 2, wherein the pressure-sensitive adhesive portions (40) are formed from corresponding sections of double-sided pressure-sensitive adhesive tape.

7. A film frame assembly (10) in combination with a window assembly (14) defining an opening (12) adjacent a window (16), wherein the film frame assembly (10) is adapted for installation over the window, the combination comprises:
the film frame assembly (10) including a frame (18) defining a frame opening (26), the frame (18) comprising a plurality of elongated frame segments (22) interconnected by a plurality of corner connector members (24), wherein a portion of each of the plurality of corner connector members (24) forms an exposed corner of the frame;
one or more pressure-sensitive adhesive portions (40) applied to at least one side of the frame (18); and a generally flexible film sheet structure (20) attached to the one or more pressure-sensitive adhesive portions (40) for covering the frame opening (26), wherein the film sheet structure (20) conforms to the shape of the frame (18) across the frame opening (26).

8. A method of making a window film frame assembly (10) adapted for installation over a window (16) in a window assembly (14), the method comprising:
providing a plurality of elongated frame segments (22) and a plurality of corner connector members (24);
assembling the corner connector members (24) between the elongated frame segments (22) to form a frame (18) defining a frame opening (26), wherein a portion of each of the plurality of corner connector members (24) forms an exposed corner of the frame (18);
applying one or more pressure-sensitive adhesive portions (40) to at least one side of the frame; and providing a generally flexible film sheet structure (20) attached to the one or more pressure-sensitive adhesive portions (40) so as to cover the opening (26);
wherein the film sheet structure (20) conforms to the shape of the frame (18) when attached across the frame opening (26).

9. A kit (50) comprising:
a frame (18) defining a frame opening (26), the frame (18) comprising a plurality of corner connector members (24) and a plurality of elongated frame segments (22), each one of the corner connecting members (24) configured to be connected between two adjacent frame segments (22), wherein the frame (18) is configured such that each of the plurality of corner connector members (24) form edges configured to abut against an end of each of the corresponding two elongated frame segments (22);
one or more pressure-sensitive adhesive portions (40) on at least one side of the frame (18); and
a generally planar film sheet structure (20) that is attachable to one or more pressure-sensitive adhesive portions (40) for covering a frame opening, wherein the film sheet structure (20) remains generally planar when attached across the frame opening (26).

## Patentansprüche

1. Folienrahmenanordnung (10), die zur Anbringung über einer Öffnung (12), die durch eine Fensteranordnung (14) definiert ist, ausgebildet ist, wobei die Folienrahmenanordnung (10) aufweist:
einen Rahmen (18), der eine Rahmenöffnung (26) definiert, wobei der Rahmen (18) mehrere längliche Rahmensegmente (22) und mehrere Eckverbinderelemente (24) aufweist, wobei nach dem endgültigen Zusammenbau des Rahmens jedes der Eckverbinderselemente (24) mit zwei benachbarten länglichen Rahmensegmenten (22) verbunden ist, wobei auch Kanten jedes der Eckverbinderelemente (24) an einem Ende jedes der entsprechenden zwei benachbarten länglichen Rahmensegmente (22) anliegen;
einen oder mehrere druckempfindliche Klebeabschnitte (40) auf mindestens einer Seite des Rahmens; und
ein im Allgemeinen flexibles Folienbahngebilde (20), das zum Abdecken der Rahmenöffnung (26) an dem einen oder den mehreren druckempfindlichen Klebeabschnitten (40) befestigt ist, wobei sich das Folienbahngebilde (20) über die Rahmenöffnung (26) an die Form der Rahmens (18) anpasst.

2. Folienrahmenanordnung (10) nach Anspruch 1, wobei das Folienbahngebilde (20) nichtklebende Außenoberflächen umfasst.

3. Folienrahmenanordnung (10) nach Anspruch 2, wobei das Folienbahngebilde (20) aus einer Gruppe ausgewählt wird, welche Sonnenschutzfolien, Sichtschutzfolien, Sicherheitsfolien, Grafikfolien, Mattfolien und jedwede Kombination daraus umfasst.

4. Folienrahmenanordnung (10) nach Anspruch 2, wobei das Folienbahngebilde (20) eine Dicke in der Größenordnung von mindestens etwa 0,127 mm (5 Mil) aufweist.

5. Folienrahmenanordnung (10) nach Anspruch 4, wobei das Folienbahngebilde (20) eine Dicke in der Größenordnung von etwa 0,127 mm (5 Mil) bis etwa 0,254 mm (10 Mil) aufweist.

6. Folienrahmenanordnung (10) nach Anspruch 2, wobei die druckempfindlichen Klebeabschnitte (40) aus entsprechenden Abschnitten von doppelseitigem druckempfindlichem Klebeband gebildet sind.

7. Folienrahmenanordnung (10) in Kombination mit einer Fensteranordnung (14), die einem Fenster (16) benachbart eine Öffnung (12) definiert, wobei die Folienrahmenanordnung (10) zur Anbringung über dem Fenster ausgebildet ist, wobei die Kombination aufweist:
die Folienrahmenanordnung (10), die einen Rahmen (18) aufweist, der eine Rahmenöffnung (26) definiert, wobei der Rahmen (18) mehrere längliche Rahmensegmente (22) aufweist, die durch mehrere Eckverbinderelemente (24) miteinander verbunden sind, wobei ein Abschnitt von jedem der mehreren Eckverbinderelemente (24) eine freiliegende Ecke des Rahmens bildet;
einen oder mehrere druckempfindliche Klebeabschnitte (40), die auf mindestens eine Seite des Rahmens (18) aufgebracht sind; und ein im Allgemeinen flexibles Folienbahngebilde (20), das zum Abdecken der Rahmenöffnung (26) an dem einen oder den mehreren druckempfindlichen Klebeabschnitten (40) befestigt ist, wobei sich das Folienbahngebilde (20) über die Rahmenöffnung (26) an die Form des Rahmens (18) anpasst.

8. Verfahren zur Herstellung einer Fensterfolienrahmenanordnung (10), die zur Anbringung über einem Fenster (16) in einer Fensteranordnung (14) ausgebildet ist, wobei das Verfahren umfasst:
Bereitstellen mehrerer länglicher Rahmensegmente (22) und mehrerer Eckverbinderelemente (24);
Montieren der Eckverbinderelemente (24) zwischen den länglichen Rahmensegmenten (22), um einen Rahmen (18) zu bilden, der eine Rahmenöffnung (26) definiert, wobei ein Abschnitt jedes der mehreren Eckverbinderelemente (24) eine freiliegende Ecke des Rahmens (18) bildet;
Aufbringen eines oder mehrerer druckempfindlicher Klebeabschnitte (40) auf mindestens eine Seite des Rahmens; und Bereitstellen eines im Allgemeinen flexiblen Folienbahngebildes (20), das an dem einen oder den mehreren druckempfindlichen Klebeabschnitten (40) befestigt wird, um die Öffnung (26) abzudecken;
wobei sich das Folienbahngebilde (20) an die Form des Rahmens (18) anpasst, wenn es über der Rahmenöffnung (26) befestigt wird.

9. Bausatz (50), der aufweist:
einen Rahmen (18), der eine Rahmenöffnung (26) definiert, wobei der Rahmen (18) mehrere Eckverbinderelemente (24) und mehrere längliche Rahmensegmente (22) aufweist, wobei jedes der Eckverbinderselemente (24) dazu ausgestaltet ist, zwischen zwei benachbarten Rahmensegmenten (22) verbunden zu werden, wobei der Rahmen (18) derart ausgestaltet ist, dass jedes der mehreren Eckverbinderelemente (24) Kanten bildet, die dazu ausgestaltet sind, an einem Ende jedes der entsprechenden beiden länglichen Rahmensegmente (22) anzuliegen;
einen oder mehrere druckempfindliche Klebeabschnitte (40) auf mindestens einer Seite des Rahmens (18); und
ein im Allgemeinen planes Folienbahngebilde (20), das an einem oder mehreren druckempfindlichen Klebeabschnitten (40) befestigbar ist, zum Abdecken einer Rahmenöffnung, wobei das Folienbahngebilde (20) im Allgemeinen plan bleibt, wenn es über der Rahmenöffnung (26) befestigt wird.

## Revendications

1. Ensemble de cadre de film (10) adapté pour être installé sur une ouverture (12) définie par un ensemble de fenêtre (14), l'ensemble de cadre de film (10) comprenant:
un cadre (18) définissant une ouverture de cadre (26), le cadre (18) comprenant une pluralité de segments de cadre allongés (22) et une pluralité d'éléments de connexion de coin (24), dans lequel, lors de l'assemblage final du cadre, chacun des éléments de connexion de coin (24) est connecté à deux segments de cadre allongés adjacents (22), comprenant des bords de chacun des éléments de connexion de coin (24) butant contre une extrémité de chacun des deux segments de cadre allongés adjacents correspondants (22);
une ou plusieurs partie(s) d'adhésif sensible à la pression (40) sur au moins un côté du cadre; et
une structure de feuille de film essentiellement flexible (20) attachée à la ou aux plusieurs partie(s) d'adhésif sensible à la pression (40) dans le but de couvrir l'ouverture de cadre (26), dans lequel la structure de feuille de film (20) épouse la forme du cadre (18) en travers de l'ouverture de cadre (26).

2. Ensemble de cadre de film (10) selon la revendication 1, dans lequel la structure de feuille de film (20) comprend des surfaces extérieures non adhésives.

3. Ensemble de cadre de film (10) selon la revendication 2, dans lequel la structure de feuille de film (20) est sélectionnée dans un groupe comprenant un film solaire pour fenêtre, un film d'intimité pour fenêtre, un film de sécurité pour fenêtre, un film d'art graphique pour fenêtre, un film de finition givrée pour fenêtre, ainsi que toutes combinaisons de ceux-ci.

4. Ensemble de cadre de film (10) selon la revendication 2, dans lequel la structure de feuille de film (20) présente une épaisseur qui est de l'ordre d'au moins environ 0,127 mm (5 mil).

5. Ensemble de cadre de film (10) selon la revendication 4, dans lequel la structure de feuille de film (20) présente une épaisseur qui est de l'ordre d'environ 0,127 mm (5 mil) à environ 0,254 mm (10 mil).

6. Ensemble de cadre de film (10) selon la revendication 2, dans lequel les parties d'adhésif sensible à la pression (40) sont formées à partir de sections correspondantes de ruban d'adhésif sensible à la pression double face.

7. Ensemble de cadre de film (10) en combinaison avec un ensemble de fenêtre (14), définissant une ouverture (12) à proximité d'une fenêtre (16), dans lequel l'ensemble de cadre de film (10) est adapté pour être installé sur la fenêtre, la combinaison comprenant:
l'ensemble de cadre de film (10) comprenant un cadre (18) définissant une ouverture de cadre (26), le cadre (18) comprenant une pluralité de segments de cadre allongés (22) interconnectés par une pluralité d'éléments de connexion de coin (24), dans lequel une partie de chacun de la pluralité d'éléments de connexion de coin (24) forme un coin exposé du cadre;
une ou plusieurs partie(s) d'adhésif sensible à la pression (40) appliquée(s) à au moins un côté du cadre (18); et une structure de feuille de film essentiellement flexible (20) attachée à la ou aux plusieurs partie(s) d'adhésif sensible à la pression (40) dans le but de couvrir l'ouverture de cadre (26), dans lequel la structure de feuille de film (20) épouse la forme du cadre (18) en travers de l'ouverture de cadre (26).

8. Procédé de fabrication d'un ensemble de cadre de film de fenêtre (10) adapté pour être installé sur une fenêtre (16) dans un ensemble de fenêtre (14), le procédé comprenant les étapes suivantes:
prévoir une pluralité de segments de cadre allongés (22) et une pluralité d'éléments de connexion de coin (24);
assembler les éléments de connexion de coin (24) entre les segments de cadre allongés (22) de manière à former un cadre (18) définissant une ouverture de cadre (26), dans lequel une partie de chacun de la pluralité d'éléments de connexion de coin (24) forme un coin exposé du cadre (18);
appliquer une ou plusieurs partie(s) d'adhésif sensible à la pression (40) à au moins un côté du cadre; et prévoir une structure de feuille de film essentiellement flexible (20) attachée à la ou aux plusieurs partie(s) d'adhésif sensible à la pression (40) de manière à couvrir l'ouverture (26),
dans lequel la structure de feuille de film (20) épouse la forme du cadre (18) lorsqu'elle est attachée en travers de l'ouverture de cadre (26).

9. Kit (50), comprenant:
un cadre (18) définissant une ouverture de cadre (26), le cadre (18) comprenant une pluralité d'éléments de connexion de coin (24) et une pluralité de segments de cadre allongés (22), chacun des éléments de connexion de coin (24) étant configuré de manière à être connecté entre deux segments de cadre adjacents (22), dans lequel le cadre (18) est configuré de telle sorte que chacun de la pluralité des éléments de connexion de coin (24) forme des bords configurés pour buter contre une extrémité de chacun des deux segments de cadre allongés correspondants (22);
une ou plusieurs partie(s) d'adhésif sensible à la pression (40) sur au moins un côté du cadre (18); et
une structure de feuille de film essentiellement plane (20) qui peut être attachée à la ou aux plusieurs partie(s) d'adhésif sensible à la pression (40) dans le but de couvrir une ouverture de cadre, dans lequel la structure de feuille de film (20) reste essentiellement plane lorsqu'elle est attachée en travers de l'ouverture de cadre (26).
